# FASCICULE DE BREVET EUROPEEN

(11) **EP 0 823 370 B1**
(45) Date de publication et mention de la délivrance du brevet: **11.04.2001**
(21) Numéro de dépôt: 96401695.0
(22) Date de dépôt: 30.07.1996
(51) Int. Cl.: B62D 55/116

(54) **Dispositif d'entraînement d'un vérin de blocage d'un bras de suspension d'un véhicule**
Antriebsvorrichtung für einen Verriegelungszylinder eines Fahrwerkslenkers eines Fahrzeuges
Actuating device for the locking cylinder of a suspension arm of a vehicle

(43) Date de publication de la demande: 11.02.1998
(73) Titulaire: GIAT INDUSTRIES, 78000 Versailles (FR)
(72) Inventeur: Faidre, Gilles, 91700 Sainte-Geneviève des Bois (FR); Gouin, Nicolas, 92350 Le Plessis-Robinson (FR)
(74) Mandataire: Célanie, Christian

(56) Documents cités:
- DE-A- 3 039 366
- DE-A- 3 433 262

## Description

Le domaine technique de la présente invention est celui des dispositifs de blocage des bras de suspension d'un véhicule destiné au dépannage d'un autre véhicule en particulier chenillé.

Pour dépanner un char de combat, on utilise un char dit de dépannage possédant une grue, une pelle et des accessoires divers nécessaires à la mission qui lui est assignée. Lorsqu'on utilise la grue pour lever un char en panne, le char de dépannage est déstabilisé par réaction de la suspension.

On a déjà proposé de connecter un système rigide qui appuie le char de dépannage sur le sol. On utilise alors à l'avant la pelle et à l'arrière des vérins de blocage fixés au châssis et que l'on vient appliquer sur l'extrémité libre des bras de suspension comme décrit dans les documents DE-A-30 39 366 et DE-A-34 33 262. Les dispositifs décrits ici comportent un vérin escamotable actionné par un autre vérin, chacun fixé en un point distinct du châssis du véhicule.

Dans certains systèmes connus, l'opérateur doit manipuler les vérins de l'extérieur pour les mettre en position par rotation, puis on commande de l'intérieur du véhicule de dépannage la descente des vérins. Les conditions actuelles du combat de chars interdit toute manoeuvre par un opérateur extérieur surtout si le milieu extérieur est vicié et il apparaît nécessaire de disposer d'un système excluant toute intervention manuelle.

Le but de la présente invention est alors de proposer un dispositif d'entraînement en rotation d'un vérin de blocage d'une suspension assurant son pivotement, commandable de l'intérieur du véhicule.

L'invention a donc pour objet un dispositif d'entraînement en rotation d'un vérin de blocage d'un bras de suspension d'un véhicule, comprenant un bras de levier fixe par rapport au châssis du véhicule et un moyen de translation constitué par un vérin auxiliaire relié au bras de levier et solidaire du vérin, caractérisé en ce que le vérin de blocage et le bras de levier sont solidaires d'un tourillon unique fixé au châssis du véhicule.

Selon une première réalisation, les tiges des vérins de blocage et auxiliaire sont disposées de manière sensiblement parallèle.

Selon une autre réalisation, le vérin auxiliaire est relié au tourillon par le bras de levier, ce dernier étant monté articulé sur le vérin auxiliaire et fixé sur le tourillon.

Selon encore une autre réalisation, le vérin auxiliaire présente un corps solidaire du vérin de blocage.

Selon encore une autre réalisation, les circuits hydrauliques des vérins de blocage et auxiliaire sont en communication au niveau de la face supérieure du piston du vérin de blocage par l'intermédiaire d'une canalisation commune.

Selon encore une autre réalisation, la canalisation commune débouche dans la chambre du vérin auxiliaire en ménageant de part et d'autre un espace dont l'un est au moins équivalent à l'épaisseur du piston du vérin auxiliaire.

Selon encore une autre réalisation, le circuit d'alimentation du vérin auxiliaire comprend du coté piston une voie à deux canalisations respectivement munies de deux clapets actionnables dans des sens opposés, et du côté chambre par une voie unique obturable par un clapet à bille.

Selon encore une autre caractéristique, le clapet à bille est actionnable par la pression hydraulique présente dans le circuit d'alimentation.

Un avantage de la présente invention réside dans l'absence de toute intervention humaine dans le blocage de la suspension du véhicule de dépannage.

Un autre avantage réside dans le fait que le déblocage de la suspension est réalisé avec les mêmes moyens sans intervention manuelle.

Un autre avantage réside dans la combinaison des moyens de commande du dispositif d'entraînement en rotation et du vérin de blocage.

Un autre avantage encore de l'invention réside dans l'interconnexion des circuits hydrauliques de commande.

Un autre avantage encore réside dans la fiabilité du dispositif qui ne fait intervenir que la pression hydraulique.

D'autres caractéristiques et avantages de l'invention ressortiront à la lumière du complément de description qui va suivre d'un mode de réalisation concret donné en relation avec des dessins sur lesquels :
- la figure 1 est une vue montrant le vérin de blocage en position escamotée,
- la figure 2 est une vue montrant ce même vérin en position de blocage, et
- les figures 3A, 3B et 4 sont des vues en coupe du vérin illustrant deux phases du fonctionnement.

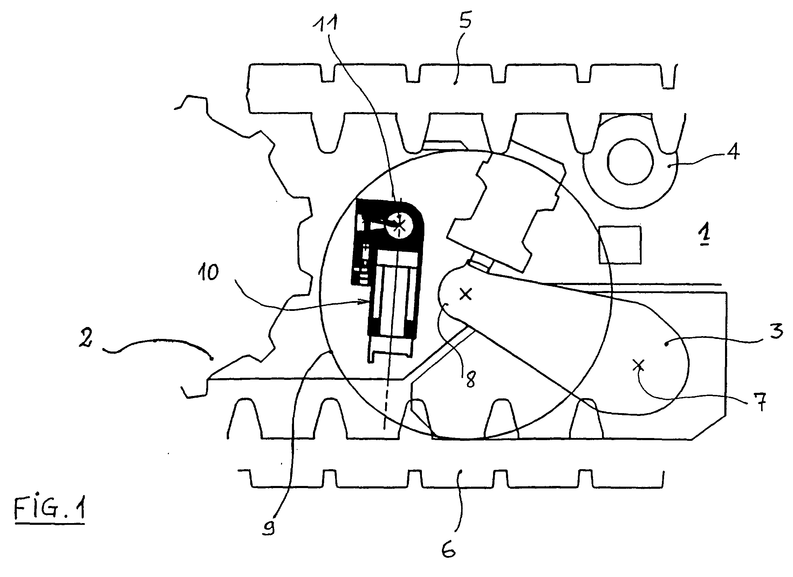

On a représenté une vue partielle d'un châssis de char sur la figure 1, où on voit la caisse 1 à laquelle sont reliés un barbotin 2, un bras de suspension 3, un galet de soutien 4 et une chenille avec son brin supérieur 5 et son brin inférieur 6. De manière classique, le bras 3 est articulé autour d'un axe 7 par rapport à la caisse 1 du véhicule et supporte à son extrémité libre 8 un galet de roulement 9 en prise sur le brin 6 de la chenille. Un vérin de blocage 10 est fixé à la caisse 1 par l'intermédiaire d'un tourillon 11 soudé sur celle-ci et sur la figure on voit que ce vérin est placé derrière le galet de roulement 9. Bien entendu, on peut bloquer trois ou quatre bras de suspension du véhicule et ce de chaque côté.

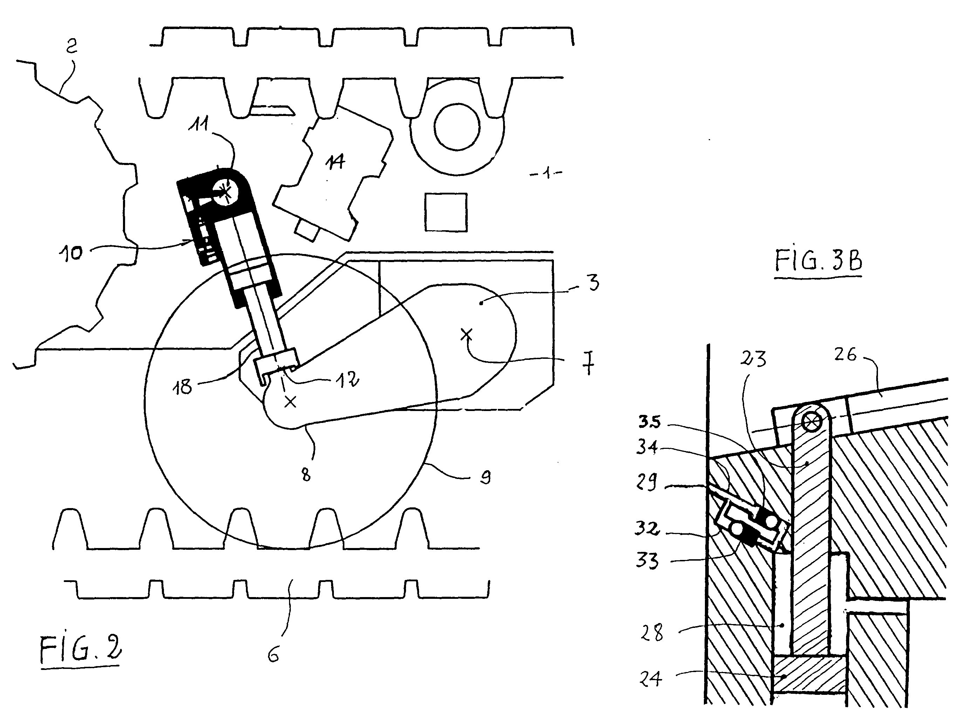

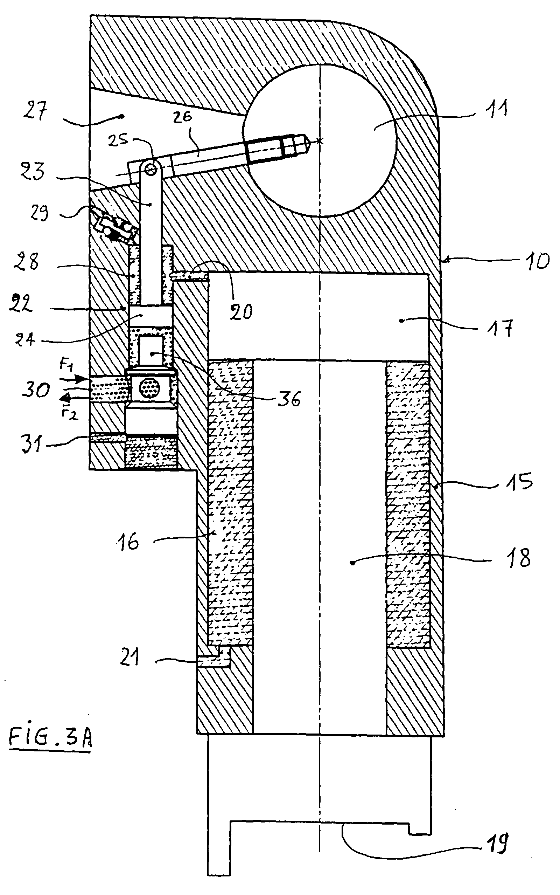

Sur la figure 2 où les mêmes éléments sont représentés, on voit que le vérin de blocage 10 a été amené par rotation sur la trajectoire de l'extrémité libre 8 du bras 3, l'extrémité du vérin étant appliquée sur une butée 12 du bras 3. Sur cette figure, la tige 18 du vérin 10 a été actionnée jusqu'à sa position extrême de translation où elle bloque le bras 3 et donc la suspension du véhicule. On voit encore sur cette figure que le bras 3 est détaché de sa butée 14 de fin de course.

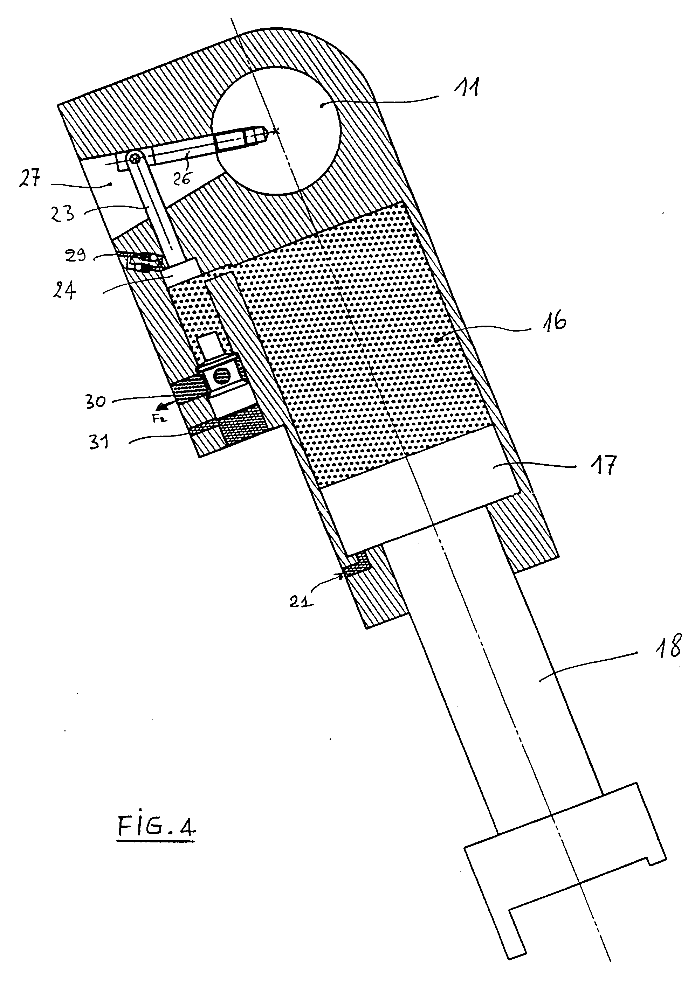

On a représenté en coupe sur les figures 3A, 3B et 4, le vérin 10 monté rotatif par rapport au tourillon 11. Le vérin 10 comporte classiquement un corps 15 délimitant une chambre 16 à l'intérieur de laquelle le piston 17 est mobile. Le piston 17 est prolongé par sa tige 18 portant à son extrémité libre une griffe 19 d'accrochage à la butée 12 du bras 3. Le piston 17 est mobile sous l'action d'un fluide d'un circuit hydraulique relié à la canalisation 20 pour l'allonger et par la canalisation 21 pour le rentrer. On associe suivant l'invention à ce vérin de blocage 10 un vérin auxiliaire 22, dont le circuit hydraulique est combiné avec celui du vérin 10. Le vérin 22 est intégré dans le corps 15 du vérin 10 et sa tige 23 solidaire du piston 24 est reliée à son extrémité libre 25 à un bras de levier 26 de manière articulée. Ce bras de levier 26 est vissé dans le tourillon 11 sensiblement perpendiculaire à son axe et à celui de la tige 18 du vérin 10. Le bras de levier 26 est donc fixe par rapport à la caisse 1 du véhicule. Au niveau du tourillon 11, le corps du vérin 10 comporte une découpe 27 dans laquelle se déplace le bras 26. Les tiges 18 et 23 des deux vérins 10 et 22 sont disposées de manière sensiblement parallèle.

Le vérin auxiliaire 22 comporte une chambre 28 dans laquelle débouche la canalisation 20 et qui est reliée au circuit hydraulique par les voies 29, 30 et 31.

La canalisation 20 débouche dans la chambre 28 du vérin auxiliaire 22 en ménageant de part et d'autre un espace dont l'un est au moins équivalent à l'épaisseur du piston 24 du vérin 22.

La voie 29 (figure 3B) comporte une canalisation 32 munie d'un clapet 33 et une canalisation 34 également munie d'un clapet 35 et débouchant toutes deux en amont de la canalisation 20 faisant communiquer les deux circuits hydrauliques des vérins 10 et 22. L'admission de fluide par la voie 29 permet de faire rentrer la tige 23 et donc d'amener le vérin 10 dans la position représentée sur la figure 3A. La chambre 28 est munie en aval du piston 24 d'un clapet 36, par exemple à bille, autorisant l'entrée du fluide hydraulique par la voie 30 dans le sens de la flèche F1 et la fermant dans le sens inverse. Le clapet 36 est ouvert dans le sens de la flèche F2 en mettant sous pression la voie 31.

Le fonctionnement est le suivant.

On suppose la position de départ de la figure 3A dans laquelle le vérin 10 est en position inactive repliée, hors de la trajectoire du bras 3, la tige 18 étant rentrée. On commande la pression dans la voie 30 dans le sens de la flèche F1, qui passe librement dans le clapet 36 pour alimenter le vérin auxiliaire 22. Le piston 24 est repoussé et la tige 23 agit sur le bras 26 provoquant une rotation du vérin 10 vers la droite de la figure. L'évacuation de la pression se fait par la voie 29 à travers la canalisation 34, dont le clapet 35 est ouvert. Durant cette phase, la canalisation 32 est fermée par le clapet 33.

Le piston 24 arrive en bout de course comme représenté sur la figure 4 en dégageant la canalisation 20. La pression passe alors dans le vérin 10, dont la chambre 16 est alors alimentée. La tige 18 sort et vient repousser la butée 12 du bras 3 comme montré sur la figure 2. Dans cette phase, l'évacuation se fait par la voie 21. La suspension est alors bloquée et la grue du véhicule de dépannage peut être utilisée.

La libération du bras 3, la rentrée de la tige 18 et l'escamotage du vérin 10 se déroulent de la manière suivante.

On suppose la position de départ représentée à la figure 4 et on met la pression dans les voies 21 et 31, la pression dans la voie 31 assurant l'ouverture du clapet 36. Le piston 17 remonte sous l'effet de la pression et l'évacuation se fait par la voie 30 suivant la flèche F2. Lorsque le piston 17 arrive en butée, la pression augmente puisque l'évacuation ne se fait plus et vient commander le clapet 33 de la canalisation 32. On met la pression dans la voie 29 qui commande le piston 24 du vérin auxiliaire 22, l'évacuation étant toujours dirigée par la voie 30. La translation du piston 24 provoque la rotation du vérin 10 qui vient occuper sa position escamotée représentée à la figure 3A. Ce fonctionnement repose sur l'utilisation d'une faible pression pour faire remonter le piston 17 et ouvrir le clapet 36 afin que l'huile puisse s'évacuer par la voie 30 suivant la flèche F2. Lorsque le piston 17 arrive en butée, l'augmentation résultante de la pression ouvre le clapet 33 qui est taré pour s'ouvrir à une pression supérieure à la pression de commande du vérin 10. L'ouverture du clapet 33 dirige le fluide vers le vérin 22 faisant passer le vérin 10 par rotation de la pression représentée sur la figure 4 à la position représentée sur la figure 3A.

Un tel système selon l'invention est caractérisé par sa compacité, qui peut être facilement intégré dans un espace où la place est peu disponible, c'est-à-dire entre la chenille et la caisse du véhicule.

## Revendications

1. Dispositif d'entraînement en rotation d'un vérin de blocage (10) d'un bras de suspension (3) d'un véhicule, comprenant un bras de levier (26) fixe par rapport au châssis du véhicule et un moyen de translation constitué par un vérin auxiliaire (22) relié au bras de levier et solidaire du vérin (10), caractérisé en ce que le vérin de blocage (10) et le bras de levier (26) sont solidaires d'un tourillon (11) unique fixé au châssis du véhicule.

2. Dispositif d'entraînement en rotation selon la revendication 1, caractérisé en ce que les tiges (18, 23) des vérins de blocage et auxiliaire (10, 22) sont disposées de manière sensiblement parallèle.

3. Dispositif d'entraînement en rotation selon la revendication 2, caractérisé en ce que le vérin auxiliaire (22) est relié au tourillon (11) par le bras de levier (26), ce dernier étant monté articulé sur le vérin auxiliaire (22) et fixé sur le tourillon (11).

4. Dispositif d'entraînement en rotation selon l'une quelconque des revendications précédentes, caractérisé en ce que le vérin auxiliaire (22) présente un corps (15) solidaire du vérin de blocage (10).

5. Dispositif d'entraînement en rotation selon la revendication 4, caractérisé en ce que les circuits hydrauliques des vérins de blocage (10) et auxiliaire (22) sont en communication au niveau de la face supérieure du piston du vérin de blocage (10) par l'intermédiaire d'une canalisation commune (20).

6. Dispositif d'entraînement en rotation selon la revendication 5, caractérisé en ce que la canalisation commune (20) débouche dans la chambre (28) du vérin auxiliaire (22) en ménageant de part et d'autre un espace dont l'un est au moins équivalent à l'épaisseur du piston (24) du vérin auxiliaire (22).

7. Dispositif d'entraînement en rotation selon la revendication 5 ou 6, caractérisé en ce que le circuit d'alimentation du vérin auxiliaire (22) comprend du coté piston (24) une voie (29) à deux canalisations (32, 34) respectivement munies de deux clapets (33, 35) actionnables dans des sens opposés, et du côté chambre (28) par une voie unique (30) obturable par un clapet à bille (36).

8. Dispositif d'entraînement en rotation selon la revendication 7, caractérisé en ce que le clapet à bille (36) est actionnable par la pression hydraulique présente dans le circuit d'alimentation.

## Patentansprüche

1. Drehantriebsvorrichtung für eine Blockierungswinde (10) eines Fahrzeugquerlenkers (3), die einen zum Fahrzeugchassis starren Hebelarm (26) und eine Verschiebevorrichtung enthält, die aus einer zusätzlichen, mit dem Hebelarm und der Winde (10) verbundenen Winde (22) besteht, dadurch gekennzeichnet, dass ein einzelner am Fahrzeugchassis befestigter Drehzapfen (11) die Blockierungswinde (10) mit dem Hebelarm (26) verbindet.

2. Drehantriebsvorrichtung nach Anspruch 1, dadurch gekennzeichnet, dass die Stifte (18, 23) der Blockierungswinde (10) und der zusätzlichen Winde (22) deutlich parallel zueinander angebracht sind.

3. Drehantriebsvorrichtung nach Anspruch 2, dadurch gekennzeichnet, dass die zusätzliche Winde (22) durch den Hebelarm (26) mit dem Drehzapfen (11) verbunden ist und der Hebelarm beweglich auf der zusätzlichen Winde (22) montiert und auf dem Drehzapfen (11) befestigt.

4. Drehantriebsvorrichtung nach irgendeinem der oben angeführten Ansprüche, dadurch gekennzeichnet, dass die zusätzliche Winde (22) mit der Blockierungswinde (10) eine Einheit (15) bildet.

5. Drehantriebsvorrichtung nach Anspruch 4, dadurch gekennzeichnet, dass die Hydraulikkreisläufe der Blockierungswinde (10) und der zusätzlichen Winde (22) auf Höhe der Kolbenoberseite der Blockierungswinde (10) durch ein gemeinsames Leitungsnetz (20) miteinander verbunden sind.

6. Drehantriebsvorrichtung nach Anspruch 5, dadurch gekennzeichnet, dass das gemeinsame Leitungsnetz (20) in die Kammer (28) der zusätzlichen Winde (22) mündet und auf beiden Seiten einen Raum bildet, von denen einer zumindest die Kolbenstärke (24) der zusätzlichen Winde (22) aufweist.

7. Drehantriebsvorrichtung nach Anspruch 5 oder 6, dadurch gekennzeichnet, dass der Versorgungskreislauf der zusätzlichen Winde (22) auf der Kolbenseite (24) einen Kanal (29) mit zwei Leitungsnetzen (32, 34) enthält, die an beiden Enden mit je zwei beweglichen Ventilen (33, 35) und auf der Kammerseite (28) durch nur einen mit einem Kugelventil (36) verschließbaren Kanal (30) ausgestattet sind.

8. Drehantriebsvorrichtung nach Anspruch 7, dadurch gekennzeichnet, dass das Kugelventil (36) durch den in dem Versorgungskreislauf vorhandenen Hydraulikdruck bewegt wird.

## Claims

1. A device to drive in rotation an locking jack (10) for a suspension arm (3) of a vehicle, comprising a lever arm (26) that is immobile with respect to the chassis of the vehicle and translation means formed by an auxiliary jack (22) linked to the lever arm and integral with the jack (10), characterised in that the locking jack (10) and the lever arm (26) are integral with a single trunnion (11) attached to the vehicle chassis.

2. A rotation drive device according to Claim 1, characterised in that rods (18, 23) of the locking and auxiliary jacks (10, 22) are arranged substantially in parallel.

3. A rotation drive device according to Claim 2, characterised in that the auxiliary jack (22) is linked to the trunnion (11) by the lever arm (26), said arm being mounted hinged to the auxiliary jack (22) and fastened to the trunnion (11).

4. A rotation drive device according to any one of the above Claims, characterised in that the auxiliary jack (22) has a body (15) that is integral with the locking jack (10).

5. A rotation drive device according to Claim 4, characterised in that the hydraulic circuits of the locking (10) and auxiliary (22) jacks communicate with the upper face of the piston of the locking jack (10) by means of common piping (20).

6. A rotation drive device according to Claim 5, characterised in that the common piping (20) opens out into the chamber (28) of the auxiliary jack (22) making a space on either side of it, one of which is at least equivalent to the thickness of the piston (24) of the auxiliary jack (22).

7. A rotation drive device according to Claims 5 or 6, characterised in that the feed circuit for the auxiliary jack (22) comprises on the piston (24) side, a channel (29) with two pipes (32, 34) respectively fitted with two valves (33, 35) that can be activated in opposing directions, and on the chamber (28) side by a single channel (30) that can be obturated by a ball valve (36).

8. A rotation drive device according to Claim 7, characterised in that the ball valve (36) is activated by the hydraulic pressure present in the feed circuit.
